# DEMANDE DE BREVET EUROPEEN

(11) **EP 1 009 058 A1**
(43) Date de publication de la demande: **14.06.2000**
(21) Numéro de dépôt: 99403005.4
(22) Date de dépôt: 02.12.1999
(51) Int. Cl.: H01M 10/54, H01M 6/52, C22B 26/12

(54) **Procédé de traitement d'un accumulateur au lithium en vue du recyclage de ses matériaux constitutifs**

(30) Priorité: 07.12.1998 FR 9815412
(71) Demandeur: COMMISSARIAT A L'ENERGIE ATOMIQUE, 75752 Paris Cédex 15 (FR)
(72) Inventeur: Bloch, Didier, 38330 Biviers (FR); Le Cras, Frédéric, 38220 Montchaboud (FR); Bourbon, Carole, 38500 La Buisse (FR); Vandelle, Pierre, 38120 Saint-Egreve (FR)
(74) Mandataire: Audier, Philippe André

(57) **Abrégé**

Procédé de traitement d'accumulateurs usagés, comprenant du lithium et un matériau actif de cathode choisi parmi les oxydes de métal de transition.

Récupération sous forme de poudres de l'oxyde de métal de transition lithié ou surlithié et du carbone.

Utilisation de l'oxyde de métal de transition surlithié en tant que matériau actif d'électrode. Electrode positive et accumulateur l'employant décrits.

## Description

### Domaine technique et art antérieur

L'invention concerne un procédé de traitement d'un accumulateur au lithium en vue de recycler ses matériaux constitutifs, c'est-à-dire essentiellement le lithium et le matériau actif de cathode qui est généralement un oxyde de métal de transition.

Le domaine technique de l'invention peut être défini comme celui des accumulateurs au lithium et plus précisément du traitement de ces accumulateurs à l'issue de leur fonctionnement utile afin d'en récupérer les éléments constitutifs et de les recycler dans le but notamment de fabriquer de nouveaux accumulateurs.

Les accumulateurs au lithium sont aujourd'hui largement utilisés pour l'alimentation électrique notamment de véhicules électriques, d'équipements portables et d'équipements fixes.

Un accumulateur au lithium est généralement constitué :
- d'une électrode positive usuellement appelée cathode contenant :
   - un matériau actif de cathode, qui est en général un oxyde de métal de transition, et éventuellement du lithium contenu dans la structure du matériau de cathode ;
   - du carbone ;
   - un liant assurant la tenue mécanique de l'électrode ;
   - un collecteur de courant usuellement en aluminium ou en cuivre, mais qui peut éventuellement être constitué d'un autre métal ou alliage. Ce collecteur de courant peut également contribuer à la tenue mécanique de la cathode, ou simplement lui servir de support ;
- d'un électrolyte organique solide, liquide ou plastifié contenant :
   - une matrice polymère solide, liquide, ou plastifiée ;
   - un sel de lithium dissous dans cette matrice ;
   - éventuellement un séparateur qui est un film mince polymère permettant d'éviter les contacts entre les deux électrodes de l'accumulateur ;
- d'une électrode négative usuellement appelée anode constituée par :
   - du lithium métallique dans le cas de filière "polymère solide" ou de la filière "Li-métal-liquide 3 volts" ; ou
   - un alliage à base de carbone dans le cas des filières "lithium-ion" fonctionnant à 4 volts ou à 3 volts.

Le tableau ci-dessous décrit sommairement les matériaux constitutifs des principales filières d'accumulateurs au lithium commercialisées ou en cours de développement :

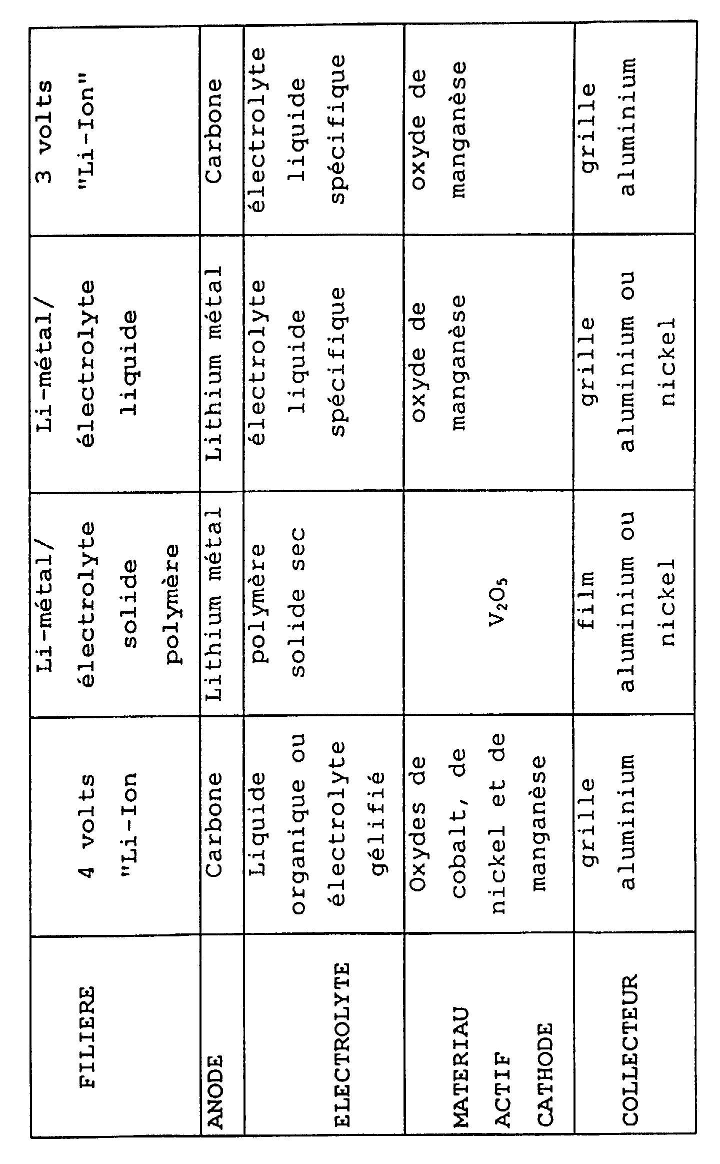

A l'issue de la vie de l'accumulateur, se pose le problème de la récupération de ses constituants et de leur éventuel recyclage en vue de la fabrication de nouveaux accumulateurs.

Compte tenu des volumes de production actuels, de la relative rareté des matériaux utilisés, et de la législation sans cesse plus contraignante sur la récupération des matériaux, la récupération des matériaux constitutifs d'accumulateurs au lithium constitue un point important dans la maîtrise du développement de ces nouvelles technologies.

Parmi ces matériaux il est en particulier essentiel de recycler le lithium et le matériau actif de cathode qui est généralement un oxyde de cobalt, de nickel ou de manganèse.

Pour donner une idée de l'importance de ce problème, plus d'une cinquantaine de millions d'accumulateurs élémentaires lithium-ion utilisant des oxydes de cobalt sont produits chaque moins dans le monde. Ceci représente plus de 50 millions d'Ampères/heures produits, équivalent à la consommation de plus de 10 tonnes de lithium par mois, et de 300 tonnes d'oxyde de cobalt. Il est raisonnable d'attendre que les prochaines générations d'accumulateurs utiliseront progressivement des matériaux actifs d'électrode positive à base d'oxydes de manganèse, et la question sera alors également posée de la récupération de cet oxyde métallique.

En se référant au tableau I ci-dessus, certains constituants de l'accumulateur au lithium peuvent être facilement récupérés après démontage, il s'agit en particulier des parties métalliques telles que les collecteurs de courant et les connexions dont la récupération est relativement aisée si on parvient par exemple à mettre en suspension les différents constituants de l'accumulateur dans un solvant approprié.

Il est ainsi possible de récupérer également l'éventuel séparateur ou film en polymère qui se retrouve en sous-produit dans la solution.

En revanche, d'autres constituants sont plus difficiles à récupérer, et ce sont précisément les constituants présentant le plus grand intérêt, il s'agit par exemple d'une part du matériau actif de cathode présent sous forme de poudre et d'autre part surtout du lithium, soit métallique, soit divisé dans le matériau de l'électrode négative.

Il existe peu d'informations disponibles concernant le recyclage des accumulateurs au lithium alors que de nombreuses études ont été effectuées sur la séparation et la récupération des métaux à partir d'autres accumulateurs tels que les accumulateurs au plomb, au nickel-cadmium, et au nickel-hydrure de métal.

Le document de Hammel Carol J. "Environmental, Health, and Safety issues of advanced electric vehicle batteries", EVS, 13, pages 206-212 se livre à une étude des possibilités de recyclage des matériaux de divers accumulateurs dont les accumulateurs de la filière "lithium-électrolyte polymère solide" et les accumulateurs de la filière "lithium-ion". Dans les deux cas, il est simplement indiqué que le lithium métallique, du fait de sa réactivité doit être considéré comme un déchet toxique et doit être désactivé par hydrolyse avant son rejet dans une décharge.

Le rejet à la décharge sans recyclage constitue en fait le procédé le plus couramment employé pour "traiter" les déchets lithiés. Une exception notable mentionnée est un procédé dans lequel :
1. Les accumulateurs sont plongés dans l'azote liquide afin de diminuer la réactivité du lithium avant d'être broyés ;
2. Les accumulateurs broyés sont traités dans une solution caustique aqueuse ;
3. Les matériaux du boîtier et les autres matériaux insolubles sont séparés des sels de lithium solubles ;
4. Les matériaux magnétiques du boîtier sont séparés en vue de leur recyclage ;
5. Les matériaux non métalliques du boîtier et des alliages sont rejetés à la décharge ;
6. Les sels de lithium s'accumulent dans la solution caustique jusqu'à ce qu'ils précipitent ;
7. Les sels sont séparés par filtration.

Ce document mentionne également un autre procédé de traitement des accumulateurs au lithium de la filière "lithium-ion" qui est axé sur la récupération uniquement du cobalt de l'électrode positive. Si celle-ci a pu être réalisée avec une certaine efficacité le procédé n'est pas économiquement viable à cause de la nécessité d'avoir recours à un démontage manuel des accumulateurs, conséquence de la charge résiduelle de l'électrode positive associée à la présence d'un mélange de solvants inflammables.

Enfin, le même document fait allusion à un procédé d'incinération à très haute température, donc à forte consommation d'énergie, qui élimine les composés organiques par combustion et permet de recycler les métaux.

Le document de Mok Kin-Wai ; Pickering Paul J. "New resources and purification technologies for the lithium industry", Light Met. (1998), 1289-1293 dont nous citons l'abrégé CA Abstract Number 129 : 6762, fait mention de deux procédés pour l'extraction et la purification du lithium à partir des accumulateurs en lithium usagés.

Un premier procédé dit procédé de purification "hybride" permet simultanément l'extraction du lithium et l'oxydation des polluants potentiels tels que les sulfures et l'ammoniac ainsi que la production de solutions d'hydroxyde de lithium substantiellement pures, de telles solutions doivent encore être retraitées pour récupérer le lithium sous une forme utilisable. Un second procédé met en jeu un filtre ionique et permet de purifier les solutions de sels de lithium monovalents en éliminant de nombreux ions polyvalents et contaminants.

Le document de Tamura Kazuo ; Ayuta Humio ; Hayasaka Atsuisi "Recovery of valuables from spent lithium batteries", (1996), Kenkyu Hokoku - Tokyotoritsu Kogyo Gijutsu Senta, 25- 59-62, dont nous citons l'abrégé CA Abstract Number 124 : 294941, est relatif à un procédé de traitement d'accumulateurs au lithium usagés dans lequel les accumulateurs sont broyés et plongés dans l'eau. Les constituants métalliques sont récupérés par un tamis tournant et un séparateur magnétique. Le lithium métallique de la cathode est lessivé avec de l'eau, puis suite à l'addition d'une solution saturée de carbonate de sodium, on récupère un précipité de carbonate de lithium.

Le dioxyde de manganèse de l'anode est dissout par de l'acide sulfurique et de l'eau oxygénée. On récupère du carbonate de manganèse par addition de carbonate de sodium.

Un autre procédé analogue dit « procédé hydrométallurgique » est décrit dans le document de Zhang Pingwei ; Yokoyama Toshir ; Itabashi Osamu ; Suzuki Toshishige ; Inoue Katsutoshi, "Hydrometallurgical process for recovery of metal values from spent lithium-ion secondary batteries", Hydrometallurgy (1998), 47(2-3), 259-271, et comprend les étapes suivantes :
- lavage pendant une 1 heure à l'acide chlorhydrique 4M en excès, avec un rapport solide/liquide de 1 : 10, et à 80°C - 100°C, des matériaux d'électrode positive, puis filtration et lavage à l'eau de manière à obtenir un résidu constitué de carbone et de matériau organique polymère, tandis que le matériau actif de cathode et le lithium ont été dissous dans le solvant ;
- séparation par extraction-centrifugation des matériaux dissous dans le solvant ;
- récupération du lithium grâce à une méthode classique de précipitation du lithium sous forme de carbonate de lithium Li₂CO₃ à une température voisine de 100°C. On ajoute à cet effet, dans le concentré extrait, une solution saturée de carbonate de sodium.

Le rendement de récupération de ce procédé est voisin de 80 %.

Dans les deux derniers document cités, on constate que le lithium récupéré est obtenu sous la forme d'un produit - à savoir du carbonate de lithium Li₂CO₃ - qui nécessite un traitement complémentaire long et coûteux pour être transformé avant de pouvoir être réutilisé dans un accumulateur.

Il en est de même du matériau actif d'électrode positive qui se trouve sous forme de carbonate (par exemple carbonate de manganèse) ou encore de sulfate (par exemple sulfate de cobalt).

Aucun des procédés décrits ci-dessus ne décrit ni même ne suggère la récupération possible simultanée à la fois du lithium et du matériau actif d'électrode positive par exemple oxyde de cobalt, de manganèse ou de nickel sous une forme directement utilisable dans un nouvel accumulateur.

Il existe donc un besoin non encore satisfait pour un procédé de traitement d'un accumulateur au lithium usagé, notamment en vue de la récupération et du recyclage des matériaux constitutifs de cet accumulateur, en particulier du matériau actif de cathode et du lithium, qui permette la récupération simultanée notamment, à la fois du matériau actif de cathode et du lithium sous une forme directement utilisable, de nouveau, dans un accumulateur au lithium.

Il existe, en outre, un besoin pour un procédé de traitement d'un accumulateur au lithium usagé, notamment en vue de la récupération et du recyclage de ses matériaux constitutifs qui soit simple, peu coûteux, fiable, rapide et qui permette un traitement en un nombre limité d'étapes avec un rendement de récupération élevé.

Le but de l'invention est de fournir un procédé de traitement d'un accumulateur au lithium usagé comprenant du lithium et un matériau actif de cathode qui réponde, entre autres, à ces besoins et, qui ne présente pas les inconvénients, limitations, défauts et désavantages des procédés de l'art antérieur, et qui surmonte les problèmes posés par les procédés de l'art antérieur.

Ce but et d'autres encore sont atteints, conformément à l'invention par un procédé de traitement d'au moins un accumulateur usagé, comprenant du lithium et un matériau actif de cathode choisi parmi les oxydes de métal de transition ; ledit procédé comprenant les étapes successives suivantes :
- démontage du boîtier externe de l'accumulateur ;
- immersion de l'accumulateur sous agitation et sous atmosphère de gaz inerte dans un alcool choisi parmi les alcools issus des alcanes linéaires ou ramifiés comprenant au moins 3 atomes de carbone, afin de disperser les constituants de l'accumulateur, et de former un alcoolate de lithium par réaction du lithium métallique de l'accumulateur avec l'alcool ;
- séparation des matériaux solides ;
- réaction dudit oxyde de métal de transition avec ledit alcoolate de lithium jusqu'à obtention d'un oxyde de métal de transition « lithié ou surlithié » présentant une stoechiométrie définie (voulue) Li : métal de transition, cette stoechiométrie est dépendante de la composition et de la structure de l'oxyde de métal de transition initial ;
- séparation des éléments insolubles comprenant essentiellement l'oxyde de métal de transition « lithié ou surlithié » et du carbone, et des éléments solubles comprenant essentiellement des sels de lithium et l'électrolyte ;
- récupération sous forme de poudres de l'oxyde de métal de transition lithié ou surlithié et du carbone ;
- évaporation de l'alcool résiduel subsistant dans lesdites poudres ;
- rinçage et séchage des poudres obtenues.

Dans ce qui précède, par « surlithiation », on entend l'insertion de lithium dans la structure d'un oxyde de métal de transition commercial, préalablement à son incorporation dans l'électrode positive ; le composé « surlithié » ainsi formé présentant des caractéristiques similaires (chimiques, cristallographiques, électrochimiques) à celles du produit obtenu par l'insertion du lithium dans l'oxyde commercial initial, tel qu'il est généré au cours d'une décharge infiniment lente de l'accumulateur jusqu'à une tension comprise entre la tension d'abandon de cet oxyde initial (vs Li/li*) et 1,0 volt (vs Li/li*).

Par lithiation, ou produit lithié, on entend toute étape intermédiaire entre le produit initial et la surlithiation correspondant au produit surlithié défini ci-dessus.

Le procédé selon l'invention répond aux besoins indiqués plus haut et surmonte les problèmes de l'art antérieur.

L'invention permet notamment à un moindre coût, avec une grande efficacité, en une seule opération, et par une succession d'étapes simples la récupération simultanée à la fois du lithium et du composé actif de cathode de l'accumulateur usagé sous la forme d'un seul composé final constitué par le composé actif de cathode lithié ou surlithié. Ce composé récupéré à l'issue du procédé selon l'invention ne nécessite aucune autre transformation ou purification longue et coûteuse comme dans les procédés de l'art antérieur et peut être réutilisé directement comme matériau de cathode dans un nouvel accumulateur au lithium.

Du fait que le composé de métal de transition lithié ou surlithié obtenu contient le lithium qui se trouvait dans l'accumulateur usagé en fin de vie, ce composé issu du procédé de l'invention peut servir dans un nouvel accumulateur en tant que source de lithium complémentaire.

Le procédé selon l'invention est réalisé à faible température, ce qui réduit notablement la consommation d'énergie et en favorise l'industrialisation. Les réactifs mis en oeuvre, c'est-à-dire essentiellement l'alcool, sont des réactifs courants, facilement disponibles, peu coûteux et ne présentant pas de risques particuliers. La cinétique globale du procédé et en particulier de son étape essentielle est rapide. Le dégagement de chaleur lors des différentes étapes est réduit.

Le procédé permet une récupération avec un rendement très élevé, généralement supérieur à 95 %, en lithium.

L'essentiel du procédé peut se dérouler dans un seul et même réacteur d'où un important gain de temps et de place.

Le procédé selon l'invention, dans son étape essentielle, utilise en tant qu'intermédiaire réactionnel des alcoolates de lithium qui sont, selon une caractéristique essentielle de l'invention, obtenus par réaction du lithium métallique de l'accumulateur usagé avec l'alcool correspondant, ce dernier ayant au moins trois atomes de carbone.

Un procédé de préparation d'alcoolate de lithium est certes connu du document US-A-5 549 880, mais il s'agit d'un simple procédé de synthèse n'ayant absolument pas pour but, la récupération du lithium et des oxydes de métaux de transition se trouvant dans des accumulateurs usagés. On utilise dans ce document de la lithine LiOH et un alcool comme précurseurs de préparation de l'alcoolate, si bien que du fait des constantes d'équilibre chimique entre LiOH et les alcools, la solution obtenue ne peut contenir des quantités appréciables d'alcoolate que si l'alcool retenu est un alcool léger (essentiellement méthanol ou éthanol).

Ce document dissuade d'utiliser des alcools plus lourds et conseille expressément de mettre en oeuvre du méthanol ou de l'éthanol, comme c'est le cas dans l'exemple unique de ce document.

L'utilisation d'un alcool plus lourd comme en particulier le pentanol-1, ou le n-propanol dans les conditions du procédé de ce document où l'on part de lithine, ne conduit qu'à la formation d'alcoolate en très faible concentration dans la solution, et donc à des cinétiques de réaction très faibles.

Le procédé selon l'invention, dans son étape essentielle, met à profit, de manière surprenante, la présence de lithium métallique dans l'accumulateur usagé pour préparer l'alcoolate en faisant réagir ce lithium métallique présent dans l'accumulateur et un alcool issu d'un alcane linéaire ou ramifié contenant au moins trois atomes de carbone.

De manière générale, il a été mis en évidence que les oxydes de métaux de transition lithiés ou surlithiés se délithient dans l'éthanol, ainsi, à titre d'exemple, nous avons pu montrer qu'un spinelle LiMn₂0₄ (qui est un matériau actif de cathode pouvant se trouver dans un accumulateur usagé) lithié conformément à l'invention, dans du pentanol-1 se délithie rapidement lors de son séjour dans de l'éthanol absolu.

Ceci confirme la prédominance de la stabilité de l'éthanolate de lithium par rapport aux oxydes de métaux de transition lithiés ou surlithiés par notre procédé, et donc par la réciproque l'impossibilité d'obtenir ces mêmes composés lithiés ou surlithiés en dispersion dans une solution d'alcool léger, tels que l'éthanol ou le méthanol.

La préparation de l'alcoolate à partir du lithium métallique déjà présent dans l'accumulateur usagé selon la deuxième étape - essentielle - du procédé selon l'invention permet, de manière surprenante d'obtenir des solutions concentrées d'alcoolate de lithium même avec des alcools comprenant trois atomes de carbone et plus au contraire du document US-A-5 549 880.

De ce fait, la cinétique de la lithiation de l'oxyde de métal de transition se trouvant dans l'accumulateur usagé est plus rapide, voire même instantanée, et le rendement est voisin de 1, grâce au caractère plus réducteur des alcoolates lourds (issus d'alcools ayant au minimum trois atomes de carbone) par rapport aux alcoolates légers.

Le procédé selon l'invention se situe dans un domaine différent qui est celui d'une chimie dite « douce » réalisée en solution et à faible température.

Le procédé selon l'invention ne fait appel, outre les composés déjà présents dans l'accumulateur usagé, qu'à des réactifs usuels, peu coûteux, facilement disponibles, tels que l'alcool, et qui ne présentent pas de risques particuliers.

De plus, le lithium de l'accumulateur usagé, au lieu de représenter un composé à éliminer, se transforme en un réactif de départ très avantageux dans le cadre du schéma réactionnel selon l'invention.

Le procédé de l'invention, au contraire des procédés de l'art antérieur présente, en outre, une cinétique rapide et ne comporte que peu d'étapes intermédiaires puisque l'étape essentielle du procédé est la réduction ménagée de l'oxyde de métal de transition par l'alcoolate de lithium.

Le procédé selon l'invention est suffisamment « doux » et précis pour ne pas s'écarter de la stoechiométrie souhaitée.

La réaction s'arrête en effet à une stoechiométrie Li : métal parfaitement définie par le choix de l'alcool, même en présence d'un large excès d'alcoolate, et qui est fonction de la composition et de la structure cristallographique de l'oxyde de métal de transition initial se trouvant dans l'accumulateur usagé.

Par stoechiométrie parfaitement définie, on entend généralement un rapport Li : métal de 0,5 à 2.

Le procédé selon l'invention a également l'avantage d'être significativement moins coûteux que les procédés de traitement d'accumulateurs usagés de l'art antérieur décrits plus haut.

Le procédé selon l'invention présente l'avantage de pouvoir être réalisé à basse température ; par basse ou faible température, on entend généralement que les différentes étapes sont soit réalisées à température ambiante - généralement voisine de 20°C - comme c'est le cas, par exemple, du démontage de l'accumulateur usagé, de la séparation des matériaux solides, de la séparation des constituants solubles, ou encore du lavage de la poudre obtenue, soit réalisées à une température basse ou faible, comme c'est le cas, par exemple, de l'immersion de l'accumulateur dans l'alcool, pour former l'alcoolate de lithium, ou de la réaction de la poudre de matériau actif de cathode avec l'alcoolate qui sont généralement réalisées à une température de 50°C ou 70°C à 260°C qui correspond sensiblement à la température d'ébullition de l'alcool mis en oeuvre (porté au reflux), ou encore du séchage généralement réalisé à une température de 80°C à 150°C.

Bien entendu, ces gammes de température peuvent être abaissées jusqu'à la température ambiante ou plus bas, si au lieu de travailler à la pression atmosphérique on opère sous pression réduite.

La mise en oeuvre de température basse ou faible favorise dans l'étape essentielle du procédé de l'invention l'obtention d'un composé réversible électrochimiquement et de stoechiométrie Li : métal parfaitement définie.

L'invention sera mieux comprise à la lecture de la description détaillée qui va suivre.

De manière plus précise, le procédé de l'invention comprend donc tout d'abord le démontage du boîtier externe de l'accumulateur ou des accumulateurs ; ce démontage se fait généralement manuellement ou à l'aide d'une machine automatique, et le boîtier externe de l'accumulateur qui est généralement en un matériau tel que de l'acier inox 304 ou 316 L ou encore en aluminium est rejeté, ou de préférence recyclé pour fabriquer de nouveaux boîtiers d'accumulateurs.

Le procédé selon l'invention est décrit en référence à un accumulateur, mais il peut être mis en oeuvre à une échelle industrielle et, par exemple, jusqu'à 100 accumulateurs peuvent être traités simultanément.

Dans une deuxième étape, selon le procédé de l'invention, l'accumulateur, débarrassé de son boîtier externe, est immergé, plongé dans un alcool.

L'alcool est, selon une caractéristique importante de l'invention, choisi parmi les alcools dérivés des alcanes linéaires ou ramifiés comprenant au moins trois atomes de carbone, de préférence de trois à dix atomes de carbone, et leurs mélanges.

Le pentanol-1 et l'isopropanol sont préférés. L'alcool se trouve généralement en excès par rapport au lithium contenu dans l'accumulateur usagé.

Par « excès », on considère généralement que l'alcool doit se trouver en quantité suffisante pour que le lithium métallique soit entièrement transformé en alcoolate. La quantité d'alcool sera donc, de préférence, au minimum d'une mole d'alcool par mole de lithium métallique se trouvant dans l'accumulateur usagé.

Cette immersion est réalisée, de préférence, sous agitation, ce qui permet de bien disperser les différents constituants de l'accumulateur, tels que le lithium, et la poudre de composé actif dans la solution alcoolique.

Cette étape est également, de préférence, réalisée sous atmosphère de gaz inerte, par exemple, sous balayage d'argon ou encore d'hélium afin d'éviter toute oxydation ou nitruration du lithium.

Cette étape est généralement réalisée en chauffant jusqu'à reflux à pression atmosphérique un volume d'alcool suffisant pour recevoir l'accumulateur ou les accumulateurs usagés à traiter, puis en le maintenant à reflux à pression atmosphérique ; la température à laquelle est réalisée l'immersion, la dispersion des différents constituants de l'accumulateur et la réaction du lithium métallique de l'accumulateur usagé avec l'alcool est donc sensiblement la température d'ébullition de l'alcool utilisé. Cette température d'ébullition pouvant, bien entendu, varier avec la pression de travail.

En effet, cette étape peut également être réalisée sous pression réduite par rapport à la pression atmosphérique, ce qui permet de diminuer la température d'ébullition de l'alcool utilisé, et donc de réaliser la réaction à température plus faible. Dans tous les cas, on opère avec reflux.

Dans le cas où du pentanol-1 est mis en oeuvre en tant qu'alcool, le reflux peut ainsi être réalisé à pression atmosphérique à une température de 139°C sensiblement égale à la température d'ébullition du pentanol-1 à la pression atmosphérique.

Dans ce même cas d'utilisation du pentanol-1 où l'on choisit de travailler sous pression inférieure à la pression atmosphérique, le reflux est alors réalisé à une température inférieure à 139°C, et typiquement à une température comprise entre la température ambiante, par exemple 20°C et 139°C.

A l'issue de la deuxième étape du procédé, on obtient donc une solution d'alcoolate de lithium dans l'alcool, par exemple, du pentanolate de lithium dans le pentanol-1 à une concentration généralement de 0,1 à 10 moles par litre en alcoolate de lithium.

Dans cette solution alcoolique se trouvent, par ailleurs, dispersés les autres constituants de l'accumulateur, et notamment le matériau actif de cathode, généralement sous la forme d'une poudre.

Dans la troisième étape du procédé de l'invention, on procède à la séparation des matériaux solides faisant partie des constituants de l'accumulateur.

Cette séparation est généralement réalisée par simple décantation, par exemple, au fond de la cuve du réacteur dans lequel s'est déroulée l'immersion de l'accumulateur, puis la dispersion de ses constituants. Les matériaux solides ainsi récupérés comprennent notamment la « connectique », les collecteurs de courant, les séparateurs, etc. qui peuvent être rejetés ou bien réutilisés après un traitement adéquat.

L'étape suivante ou quatrième étape peut être considérée comme l'étape fondamentale du procédé selon l'invention.

Dans cette étape, on réalise la réaction du matériau actif de cathode de l'accumulateur usagé qui est généralement un oxyde de métal de transition et qui se trouve sous forme de poudre en dispersion dans la solution alcoolique de l'étape précédente. Au cours de cette étape, encore appelée étape de réduction ménagée de l'oxyde de métal de transition par l'alcoolate de lithium, le lithium de l'alcoolate de lithium est libéré et vient s'insérer dans le réseau cristallin du matériau actif de cathode. Cette réaction a une cinétique extrêmement rapide.

Si bien que l'alcoolate, dès qu'il est formé, réagit spontanément avec l'oxyde de métal de transition.

Le procédé selon l'invention s'applique au matériau actif de cathode quel que soit l'oxyde de métal de transition dont il est constitué.

Cet oxyde de métal de transition est choisi, de préférence, parmi les oxydes de métaux de transition au sens strict du terme, c'est-à-dire les oxydes de V, Mn, Co, Ni, Ti et parmi les oxydes mixtes de ces métaux avec un autre métal, choisi, par exemple, parmi les métaux alcalins et alcalinoterreux.

Par oxyde, on entend également toutes les formes cristallines que peuvent prendre les oxydes cités ci-dessus.

Le procédé selon l'invention est applicable, par exemple, à un matériau de cathode constitué par tout oxyde de manganèse de degré d'oxydation moyen du manganèse supérieur ou égal à + 3, à titre d'exemple de ceux-ci, on pourra citer le béta-MnO₂, le gamma-MnO₂, le epsilon-MnO₂, les composés de formules voisines de Li_{o,3}MnO₂ (par exemple le produit « TADIRAN » Li_{o,33}MnO_{2,03}), le LiMn₂O₄.

Le béta-MnO₂ et le LiMn₂0₄ donnent tous deux en tant que produit final du Li₂Mn₂O₄.

On peut encore citer les oxydes de manganèse de structure spinelle situés dans le domaine du diagramme de phases Li, Mn, O délimité par les compositions MnO₂, LiMn₂O₄, Li₄Mn₅O₁₂.

Le procédé est également applicable à tous les matériaux de cathode constitués pour tous les autres oxydes de métaux de transition, tels que, par exemple, le V₂O₅, le NiO₂, le CoO₂, etc.

L'étape de réduction ménagée est généralement réalisée en chauffant jusqu'au reflux la dispersion (suspension ou solution) obtenue dans l'étape précédente, puis en la maintenant au reflux à pression atmosphérique et à la température de réaction, qui correspond donc sensiblement à la température d'ébullition de l'alcool utilisé. Cette température d'ébullition pouvant, bien entendu, varier avec la pression de travail.

La réaction est réalisée, de préférence, sous agitation et sous atmosphère inerte, de préférence, sous balayage d'argon.

Elle peut cependant, également, être réalisée sous pression réduite par rapport à la pression atmosphérique, ce qui permet de diminuer la température d'ébullition de l'alcool utilisé et donc de réaliser la réaction à température plus faible. Dans tous les cas, on opère avec reflux.

Dans le cas où du pentanol-1 est mis en oeuvre en tant qu'alcool, le reflux peut ainsi être réalisé dans les conditions déjà décrites plus haut pour la deuxième étape.

Cette diminution de la température de travail permet, au stade industriel :
- de diminuer les coûts de production liés au chauffage de la solution ;
- de réaliser le traitement de lithiation à plus basse température.

Au cours de cette étape, l'alcoolate opère une réduction ménagée de l'oxyde de métal de transition se trouvant dans l'accumulateur usagé, jusqu'à obtenir une stoechiométrie Li : métal définie.

Si la quantité de matériau actif de cathode usagé, c'est-à-dire d'oxyde de métal de transition, présent dans la solution, est suffisante pour absorber la totalité du lithium susceptible d'être libéré par l'alcoolate, il n'est pas nécessaire de rajouter du matériau actif de cathode supplémentaire issu d'une source autre que celle constituée par l'accumulateur ou les accumulateurs usagé(s) en cours de traitement. La réaction est alors totale et le rendement de la réaction est très voisine de 100 %, tout le lithium, initialement contenu dans la solution, est intercalé dans le réseau cristallin du matériau actif de cathode.

Si la quantité de matériau actif de cathode (oxyde de métal de transition) usagé présent dans la solution (suspension ou dispersion) est insuffisante pour absorber tout le lithium susceptible d'être libéré par l'alcoolate, il est alors nécessaire d'ajouter dans la solution du matériau actif de cathode frais supplémentaire, en plus de l'oxyde de métal de transition fourni par l'accumulateur ou les accumulateurs usagé(s) traité(s). Ce matériau actif de cathode qui est, de préférence, le même que le matériau actif de cathode, c'est-à-dire que l'oxyde de métal de transition issu de l'accumulateur usagé traité déjà présent dans la solution, est choisi parmi les oxydes de métaux de transition déjà cité plus haut. Il est généralement issu d'un matériau brut habituellement synthétisé par ce type d'application dont la plupart ont été mentionnés ci-dessus.

La quantité de matériau actif de cathode - oxyde de métal de transition frais à ajouter peut être déterminée par dosage du lithium résiduel contenu dans la solution. Cette opération peut être complètement automatisée de manière à ajuster au plus près la quantité de matériau de cathode nécessaire à l'absorption complète du lithium contenu dans la solution.

Par ailleurs, il est possible aussi de travailler systématiquement en présence d'un excès d'oxyde de métal de transition, par exemple, d'oxyde de manganèse, on se trouve alors dans le cas précédent (quantité suffisante de matériau actif).

L'étape suivante du procédé selon l'invention est une étape de séparation des éléments insolubles et des éléments solubles de la solution (dispersion) issue de l'étape précédente.

Les éléments insolubles comprennent essentiellement l'oxyde de métal de transition lithié ou surlithié et du carbone, tandis que les éléments solubles contiennent essentiellement des sels de lithium, tels que du LiPF₆, du LiAsF₆ et du Li(CF₃SO₂)₃ et l'électrolyte.

Cette opération de séparation est généralement réalisée par centrifugation et décantation.

On récupère ensuite, généralement sous forme de poudre, par exemple par filtration, les éléments solides insolubles séparés lors de l'étape précédente. Puis on évapore le solvant, c'est-à-dire l'alcool résiduel subsistant dans lesdits éléments insolubles ; la température à laquelle cette étape est réalisée dépend de l'alcool utilisé et est généralement de 50 ou 70 à 260°C sous pression atmosphérique.

La poudre contenant le matériau actif de cathode lithié ou surlithié, c'est-à-dire l'oxyde de métal de transition lithié ou surlithié et la poudre de carbone sont séparées rincées et séchées, puis on leur fait subir les traitements appropriés pour pouvoir les utiliser à nouveau dans la fabrication des accumulateurs.

Ces traitements « appropriés » sont choisis, par exemple, parmi les traitements thermiques, le broyage, etc.

Ou bien, on peut laisser la poudre d'oxyde de métal de transition lithié ou surlithié avec la poudre de carbone sans les séparer, puisque l'on a besoin des deux dans un nouvel accumulateur.

Le rinçage de la poudre d'oxyde de métal de transition lithié ou surlithié est réalisé dans tout liquide adéquat, par exemple, dans l'alcool précédemment utilisé comme solvant, l'hexane, le tétrahydrofurane, ou l'eau afin d'éliminer l'excès éventuel d'alcoolate, puis on sèche la poudre, généralement sous vide partiel, et à une température, par exemple, de 80°C à 150°C, de préférence, voisine de 150°C pendant une durée adéquate.

La température du séchage peut être plus élevée à savoir jusqu'à 250°C, voire 400°C, mais à condition que cela ne provoque pas de modification de la structure du produit.

Le séchage a pour but d'éliminer les impuretés et autres éléments organiques qui peuvent être présents à la surface du produit.

Les conditions du rinçage et du séchage de la poudre de carbone sont sensiblement analogues.

On peut également rincer, sécher et récupérer ensemble le carbone et l'oxyde de métal de transition si ces deux poudres n'ont pas été séparées.

Le procédé selon l'invention peut comprendre, en outre, une étape supplémentaire de traitement thermique du matériau - oxyde de métal de transition lithié ou surlithié réalisée après le séchage.

Le traitement thermique est réalisé à une température généralement de 150°C à 800°C, de préférence, de 300°C à 600°C, de préférence, encore de 300°C à 500°C et pendant une durée généralement de 30 minutes à 3 heures, de préférence, de 1 à 2 heures, généralement sous atmosphère neutre.

Ce traitement thermique, qui ne doit pas être confondu avec le séchage, a pour but essentiellement de modifier éventuellement la structure et/ou le comportement électrochimique du matériau lithié ou surlithié.

Ainsi, la lithiation par le procédé selon l'invention d'un produit brut de composition Li_{o,33}MnO_{2,03}, tel que celui utilisé par TADIRAN BATTERIES, conduit à la synthèse d'un produit de composition voisine de LiMnO₂.

Si on fait subir à ce produit un traitement thermique sous atmosphère neutre à 120°C pendant 1 heure, on ne modifie pas sa structure, qui correspond à celle du produit initial TADIRAN ayant subi une décharge électrochimique dans un accumulateur.

Si par contre on fait subir à ce même produit un traitement thermique à une température supérieure, par exemple à 300°C pendant 1 heure, on observe la transformation partielle de la structure initiale en structure spinelle quadratique de type Li₂Mn₂O₄. Ce produit, constitué d'un mélange de phases très désordonnées cristallographiquement, présente la particularité de présenter un comportement électrochimique intéressant entre 1,8 et 4,3 volts.

En effet, ce comportement est intermédiaire entre le comportement électrochimique des produits TADIRAN et celui des structures spinelles de type LiMn204.

Il est donc possible de moduler à volonté l'importance relative des étapes électrochimiques dues à chacune de ces phases, et de disposer ainsi d'un produit dont la tension en décharge évolue plus régulièrement en fonction de l'insertion du lithium que celle de chacun des produits pris séparément.

On n'observe plus le double plateau caractéristique des structures spinelles mais une diminution continue et régulière de la tension de décharge en fonction du taux d'insertion du lithium.

Il est ainsi possible de synthétiser à partir des produits « usagés » toute une gamme de nouveaux produits (constitués par des mélanges des deux structures lithiées) présentant des caractéristiques électrochimiques intéressantes.

L'invention a également trait à l'oxyde de métal de transition lithié ou surlithié susceptible d'être obtenu par le procédé décrit ci-dessus.

Un tel oxyde de métal de transition lithié ou surlithié se distingue des composé de l'art antérieur par le fait qu'il est fortement lithié avec une stoechiométrie Li : métal élevée et parfaitement définie, qu'il est stable et réversible vis-à-vis de l'insertion et de la désinsertion du lithium.

Par stoechiométrie Li : métal élevée, on entend généralement un rapport Li : Métal de 0,5 à 2.

La stabilité du composé selon l'invention correspond à une formulation stable de celui-ci qui est peu affectée notamment par un séjour prolongé à l'air sec ou ambiant, - par séjour prolongé on entend généralement un séjour d'une durée de 24 à 240 heures - ou par une immersion dans l'eau.

Cette stabilité est définie par la stabilité observée des spectres de diffraction des rayons X et par le caractère invariant du degré d'oxydation du métal de transition tel que le manganèse.

Cette stabilité du produit selon l'invention permet de le conditionner, de le stocker et de le manipuler plus facilement.

L'invention a également trait à l'utilisation de l'oxyde de métal de transition lithié ou surlithié décrit ci-dessus en tant que matériau actif d'électrode, en particulier en tant que matériau actif d'électrode positive. Le procédé selon l'invention permet la récupération à faible coût du lithium et des matériaux actifs usagés, il en résulte que les matériaux actifs proposés par ce procédé selon l'invention sont aussi peu coûteux.

L'invention concerne en outre une électrode, comprenant en tant que matériau actif avant qu'elle n'ait subi une quelconque opération de charge ou de décharge, l'oxyde de métal de transition lithié ou surlithié tel qu'il est décrit ci-dessus.

De préférence, ladite électrode est une électrode positive.

L'invention est relative enfin à un accumulateur comprenant une telle électrode en particulier à un accumulateur comprenant une électrode positive comprenant avant qu'elle n'ait subi une quelconque opération de charge ou de décharge l'oxyde de métal de transition lithié ou surlithié selon l'invention.

Dans ce dernier type d'accumulateur, l'électrode négative peut être par exemple de manière classique soit une électrode négative composite par exemple à base carbone ou à base d'étain ou encore en SnO₂, soit une électrode négative en lithium métallique ou en alliage de lithium ou toute autre électrode négative adéquate.

L'utilisation dans ces accumulateurs des composés d'électrode positive fortement lithiés (lithiés ou surlithiés) selon l'invention permet de surmonter les problèmes liés à des densités d'énergie et/ou à des durées de vies insuffisantes qui se posaient jusqu'alors dans ces accumulateurs, comme cela a déjà été mentionné plus haut.

Ainsi, dans les accumulateurs utilisant une électrode négative composite, la lithiation ou surlithiation du matériau actif de l'électrode positive selon l'invention compense la perte de capacité due à l'utilisation d'une électrode négative composite en remplacement du lithium métallique.

Autrement dit, l'incorporation préalable (c'est-à-dire avant même que l'électrode n'ait subi une quelconque charge ou décharge) de lithium dans le matériau actif d'électrode positive selon l'invention augmente la quantité totale de lithium disponible et donc la densité d'énergie.

Il est possible d'obtenir un gain de 10 % en densité d'énergie et donc en autonomie des accumulateurs à électrode négative composite.

De même, dans les accumulateurs utilisant une électrode négative en lithium métallique, l'accumulateur est assemblé à l'état déchargé, la réserve d'ions lithium est déjà contenue dans le matériau de l'électrode positive selon l'invention et l'accumulateur débute sa vie par une charge, c'est-à-dire par un dépôt de lithium issu du matériau actif d'électrode positive sur l'électrode négative au lieu d'un creusement, c'est-à-dire que l'on évite de creuser l'électrode négative de lithium métallique au cours d'une première décharge, améliorant ainsi au cours du cyclage la qualité de l'interface électrode négative-électrolyte.

Une évolution plus favorable de la morphologie de l'électrode négative au cours des cycles de charge et de décharge en résulte, ralentissant ainsi la croissance dendritique (ou dépôts en forme d'aiguille). La perte de capacité ou la destruction de l'accumulateur par court-circuit interne est fortement retardée.

On obtient grâce à la mise en oeuvre des électrodes positives selon l'invention dans ce type d'accumulateur une augmentation de 10 % à 20 % de la densité d'énergie des accumulateurs associée à une durée de vie améliorée.

L'invention trouve son application dans tous les domaines où l'on utilise des accumulateurs au lithium et dans lesquels on pourra mettre à profit les améliorations des performances et le faible coût des matières recyclées obtenues grâce à l'invention : on peut citer parmi les domaines d'application :
- les équipements portables, tels que téléphonie mobile, camescopes, ordinateurs, etc. ;
- les véhicules électriques ;
- les équipements fixes, tels que les batteries de centraux téléphoniques, d'aéroports, etc.

## Revendications

1. Procédé de traitement d'au moins un accumulateur usagé, comprenant du lithium et un matériau actif de cathode choisi parmi les oxydes de métal de transition ; ledit procédé comprenant les étapes successives suivantes :
- démontage du boîtier externe de l'accumulateur ;
- immersion de l'accumulateur sous agitation et sous atmosphère de gaz inerte dans un alcool choisi parmi les alcools issus des alcanes linéaires ou ramifiés comprenant au moins 3 atomes de carbone, afin de disperser les constituants de l'accumulateur, et de former un alcoolate de lithium par réaction du lithium métallique de l'accumulateur avec l'alcool ;
- séparation des matériaux solides ;
- réaction dudit oxyde de métal de transition avec ledit alcoolate de lithium jusqu'à obtention d'un oxyde de métal de transition « lithié ou surlithié » présentant une stoechiométrie définie Li : métal de transition ;
- séparation des éléments insolubles comprenant essentiellement l'oxyde de métal de transition « lithié ou surlithié » et du carbone, et des éléments solubles comprenant essentiellement des sels de lithium et l'électrolyte ;
- récupération sous forme de poudres de l'oxyde de métal de transition lithié ou surlithié et du carbone ;
- évaporation de l'alcool résiduel subsistant dans lesdites poudres ;
- rinçage et séchage des poudres obtenues.

2. Procédé selon la revendication 1, dans lequel la réaction de l'oxyde de métal de transition avec l'alcoolate de lithium et l'immersion de l'accumulateur dans l'alcool pour former ledit alcoolate sont réalisées à la pression atmosphérique et à une température de 50°C à 260°C.

3. Procédé selon la revendication 2, dans lequel la réaction de l'oxyde de métal de transition avec l'alcoolate de lithium et/ou l'immersion de l'accumulateur dans l'alcool est(sont) réalisée(s) à une pression inférieure à la pression atmosphérique.

4. Procédé selon l'une quelconque des revendications 1 à 3, dans lequel ledit alcool est choisi parmi les alcools issus des alcanes linéaires ou ramifiés de 3 à 10 atomes de carbone, et leurs mélanges.

5. Procédé selon la revendication 4, dans lequel ledit alcool est le pentanol-1 ou l'isopropanol.

6. Procédé selon l'une quelconque des revendications 1 à 5, dans lequel la deuxième étape de procédé est réalisée en chauffant jusqu'à reflux à pression atmosphérique ou à une pression inférieure à la pression atmosphérique un volume d'alcool suffisant pour recevoir l'accumulateur ou les accumulateurs usagé(s) à traiter, puis en le maintenant à reflux à pression atmosphérique ou à une pression inférieure à la pression atmosphérique sous agitation et sous atmosphère inerte.

7. Procédé selon l'une quelconque des revendications 1 à 6, dans lequel l'alcool se trouve en excès par rapport au lithium métallique contenu dans l'accumulateur usagé.

8. Procédé selon la revendication 1, dans lequel ledit oxyde de métal de transition est choisi parmi les oxydes de métaux de transition, et les oxydes mixtes de métaux de transition avec un autre métal.

9. Procédé selon la revendication 8, dans lequel ledit métal de transition est choisi parmi V, Mn, Co, Ni et Ti.

10. Procédé selon l'une quelconque des revendications 1 à 9, dans lequel l'étape de réaction de l'oxyde de métal de transition avec l'alcoolate de lithium est réalisée en chauffant jusqu'à reflux à pression atmosphérique ou à une pression inférieure à la pression atmosphérique, la dispersion obtenue lors de l'étape précédente, puis en la maintenant à reflux à la température de réaction, sous agitation et sous atmosphère inerte.

11. Procédé selon l'une quelconque des revendications 1 à 10, dans lequel lors de l'étape de réaction de l'oxyde de métal de transition avec l'alcoolate de lithium la quantité de matériau actif de cathode - oxyde de métal de transition usagé est insuffisante pour absorber tout le lithium susceptible d'être libéré par l'alcoolate et qu'on ajoute dans la solution du matériau actif de cathode - oxyde de métal de transition frais supplémentaire.

12. Procédé selon la revendication 11, dans lequel la quantité de matériau actif de cathode - oxyde de métal de transition frais à ajouter est déterminée par dosage du lithium résiduel contenu dans la solution.

13. Procédé selon l'une quelconque des revendications 1 à 12, comprenant, en outre, une étape supplémentaire de traitement thermique de l'oxyde de métal de transition lithié ou surlithié, réalisée après le séchage.

14. Procédé selon la revendication 13, dans lequel le traitement thermique est réalisé à une température de 150°C à 800°C et pendant une durée de 30 minutes à 3 heures.

15. Oxyde de métal de transition lithié ou surlithié susceptible d'être obtenu par le procédé selon l'une quelconque des revendications 1 à 12.

16. Oxyde de métal de transition lithié ou surlithié selon la revendication 15, présentant une stoechiométrie Li : métal de 0,5 à 2, stable, et réversible vis-à-vis de l'insertion et de la désinsertion du lithium.

17. Oxyde de métal de transition lithié ou surlithié selon la revendication 15 ou 16, ayant subi, en outre, un traitement thermique selon l'une quelconque des revendications 13 et 14.

18. Utilisation de l'oxyde de métal de transition lithié ou surlithié selon l'une quelconque des revendications 15 à 17, en tant que matériau actif d'électrode.

19. Electrode comprenant en tant que matériau actif, avant qu'elle n'ait subi une quelconque opération de charge ou de décharge, l'oxyde de métal de transition lithié ou surlithié selon l'une quelconque des revendications 15 à 17.

20. Electrode selon la revendication 19, qui est une électrode positive.

21. Accumulateur comprenant une électrode, selon l'une quelconque des revendications 19 à 20.

22. Accumulateur comprenant une électrode positive, selon la revendication 20 et une électrode négative composite.

23. Accumulateur comprenant une électrode positive, selon la revendication 20 et une électrode négative en lithium métallique ou en alliage de lithium.
